# EUROPEAN PATENT SPECIFICATION

(11) **EP 4 267 836 B1**
(45) Date of publication and mention of the grant of the patent: **26.11.2025**
(21) Application number: 21844407.3
(22) Date of filing: 22.12.2021
(51) Int. Cl.: F01K 25/10, F22B 1/18, F25J 1/00

(54) **INTEGRATED SYSTEM FOR ACCUMULATING POWER OR FOR GENERATING ELECTRIC POWER AND NATURAL GAS**
INTEGRIERTES SYSTEM ZUR STROMAKKUMULATION ODER ZUR ERZEUGUNG VON STROM UND ERDGAS
SYSTÈME INTÉGRÉ POUR ACCUMULER DE L'ÉNERGIE OU POUR GÉNÉRER DE L'ÉNERGIE ÉLECTRIQUE ET DU GAZ NATUREL

(30) Priority: 23.12.2020 IT 202000032210
(43) Date of publication of application: 01.11.2023
(73) Proprietor: Saipem S.p.A., 20138 Milano (IT)
(72) Inventor: BERRA, Matteo, 20138 Milano (IT); BRUNO, Lorenzo, 20138 Milano (IT)
(74) Representative: Croce, Valeria
(86) International application number: PCT/IB2021/062197
(87) International publication number: WO 2022/137170

(56) References cited:
- JP-A- 2001 041 007
- JP-A- 2002 168 101
- US-A- 4 995 234
- US-A1- 2009 277 189
- US-A1- 2013 104 525
- US-A1- 2014 245 779
- NAKAIWA M ET AL: "Evaluation of an energy supply system with air separation", ENERGY CONVERSION AND MANAGEMENT, ELSEVIER SCIENCE PUBLISHERS, OXFORD, GB, vol. 37, no. 3, 1 March 1996 (1996-03-01), pages 295 - 301, XP004039816, ISSN: 0196-8904, DOI: 10.1016/0196-8904(95)00787-3

## Description

### Technical field of the invention

The present invention finds application in the field of managing situations of excess electric power availability or excess natural gas supply.

### Background art

The electric power network and natural gas distribution network often need to address periods of excess intake, by producers, alternating with periods of shortage, during which the demand tends to be greater than the supply.

As for the electric power network, this crisis is aggravated by the marked increase in using renewable sources, which, because of the inherent discontinuity thereof, create a great imbalance of the network, and that is of the lack of correlation between periods of demand and periods of supply; typically, the gas network needs to address a trend of demand and supply characterized by seasonal cycles.

Attempts to find a point of equilibrium between supply and demand are based, to-date, on different strategies for the electric power network and the natural gas network.

As for the electric field, the base load is entrusted to large thermal power plants, and compensates the lack of energy, using sources of hydropower and small gas turbines; many accumulation systems have also been studied but, so far, they have proven to be costly and with limited capacity.

In contrast, the gas network is stabilized by accumulating gas in exhausted wells and importing liquefied natural gas (LNG) during periods when demand is poor, and by the release of the gas accumulated, both directly, from the wells, and for regasification of LNG.

National governments are increasingly considering gas reserves to be strategic and invest in new storages.

The main attempts at reconciliation between the production and demand of electric power comprise the use of accumulators, such as, electric batteries, CAES (*Compressed Air Energy Storage*) and LAES (*Liquid Air Energy Storage*)*;* the latter system is the most suitable for storing large amounts of energy, although it has the disadvantage of a low efficiency due to the high energy cost of producing liquid air.

One attempt to remedy the lack of recovery of the frigories of LNG, which simultaneously increases the efficiency of LAES is described in patent documents KR 102147234B1 and CN 207420649U.

These show the use of LNG for liquefying a current of compressed air, using liquefied natural gas, which must be imported from the outside, instead of being produced from natural gas (NG); i.e., these systems consume liquefied natural gas the production of which non-renewable energy sources have contributed to.

Electric power production by means of gas turbines is no longer considered a means of producing "clean" energy, since large amounts of greenhouse gases are released into the atmosphere; furthermore, having to use a non-renewable source because it was impossible to accumulate, at least in part, the energy produced in another period from the renewable sources results in increased system costs.

As for the accumulation of gas, the storage capacity in exhausted wells is often limited, with respect to today's demands, while the regasification of LNG has the fault of not completely recovering the energy served to liquefy it.

The prior art document US 2014/245779 describes a system for the regasification of liquid natural gas, wherein the frigories of a portion of a liquefied natural gas (LNG) current are used for separating nitrogen in an Air Separation Unit (ASU), from which a flow is obtained to be send to a combustor. Downstream of the combustor, there is a step of cooling, dehydration and liquefaction of carbon dioxide by means of a second portion of the liquefied natural gas.

The prior art document JP 2001 041007 describes the combined use of liquefied natural gas (LNG) and liquefied oxygen for liquefying one same current of carbon dioxide.

### Summary of the invention

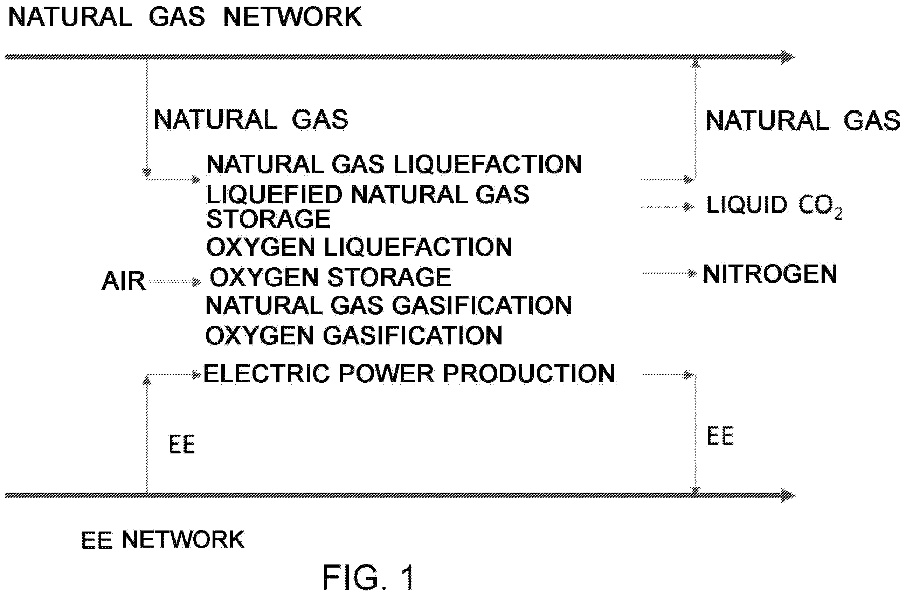

The inventors of the present patent application have developed a process, outlined in the general concepts thereof by the diagram in figure 1, for accumulating electric power, for example in excess with respect to the market demands, in the form of liquefied natural gas, which is then returned along with the natural gas when required.

Furthermore, the developed process allows separating carbon dioxide and liquefying it, in order to destinate it to other uses.

### Object of the invention

The invention in defined by the process of claim 1 and the plant of claim 17.

### Brief description of the drawings

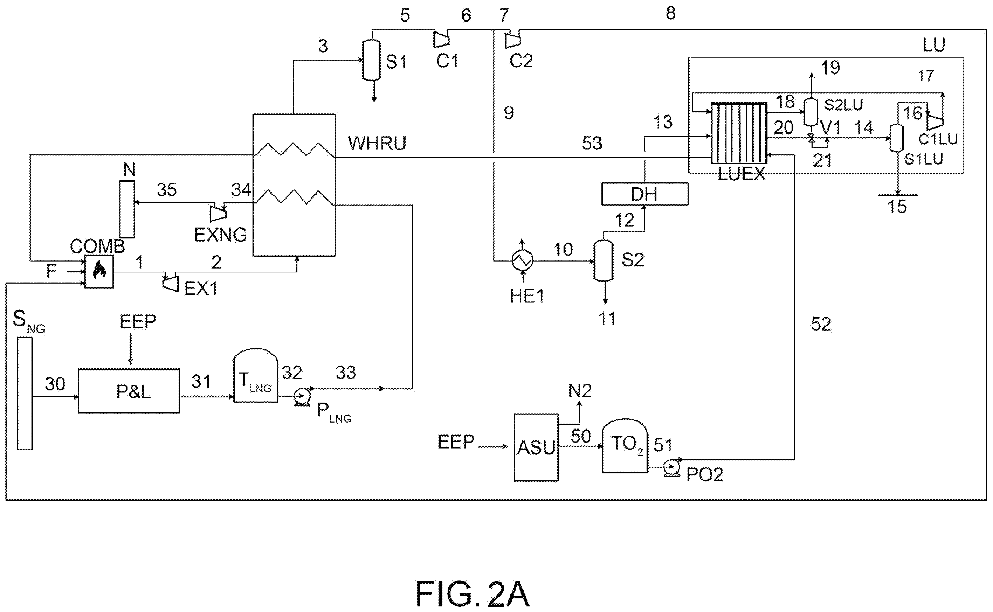

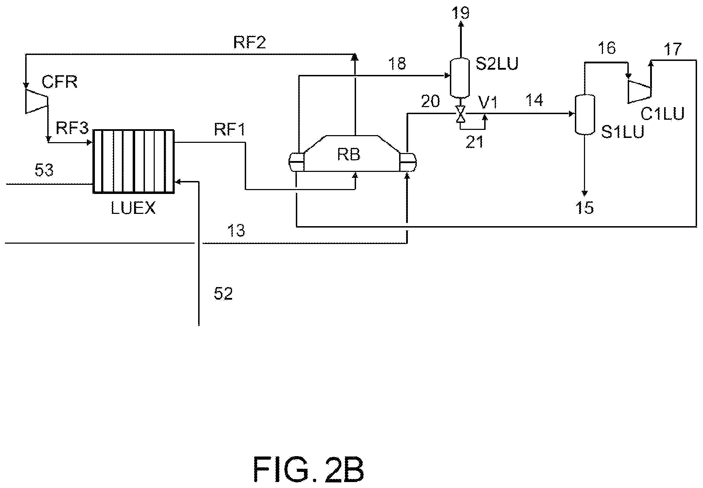

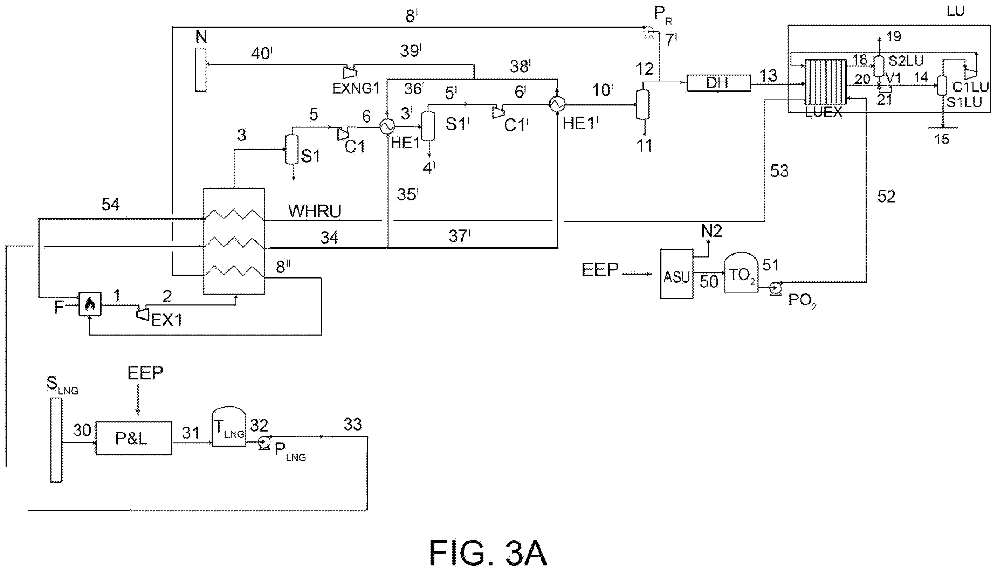

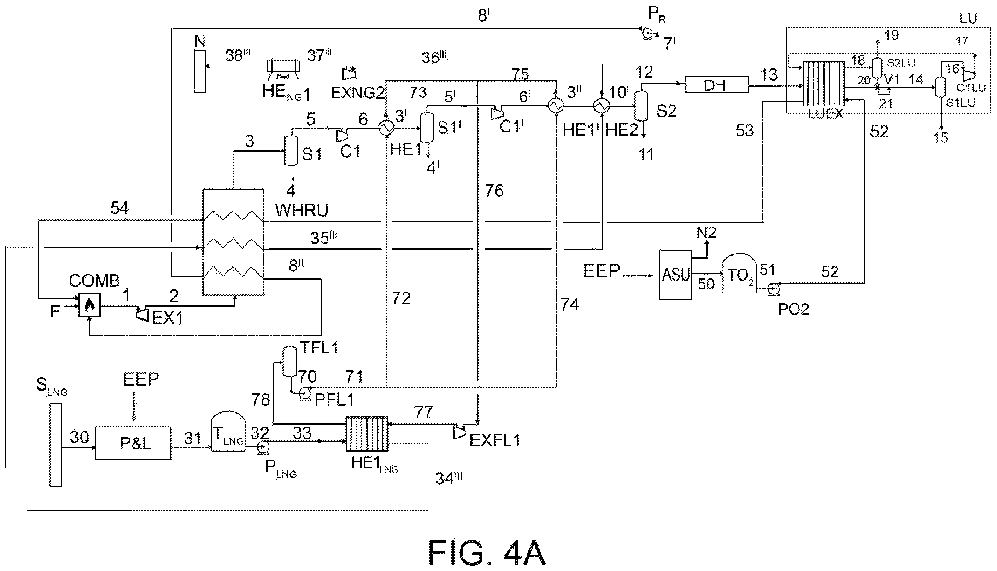

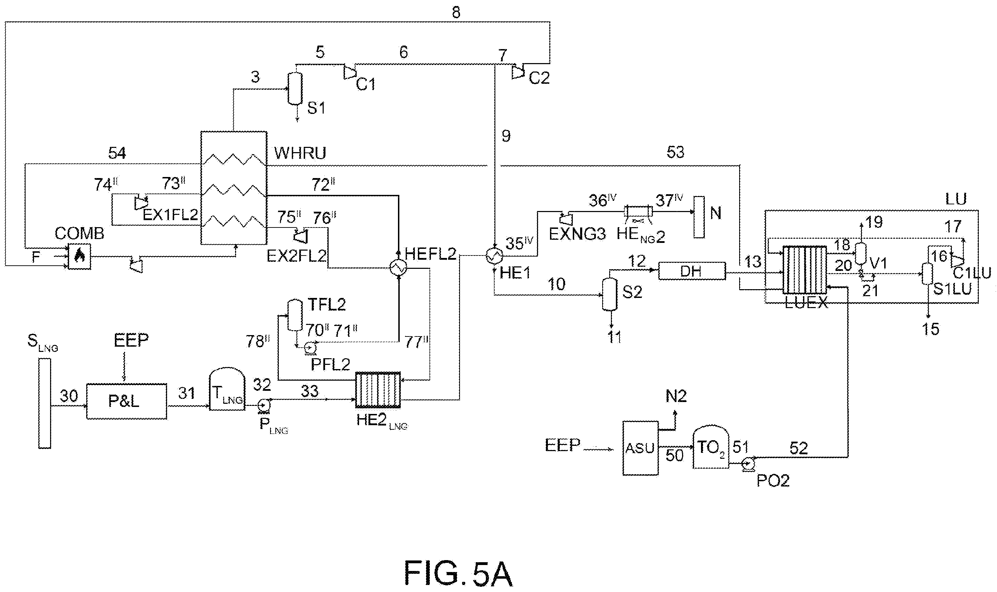

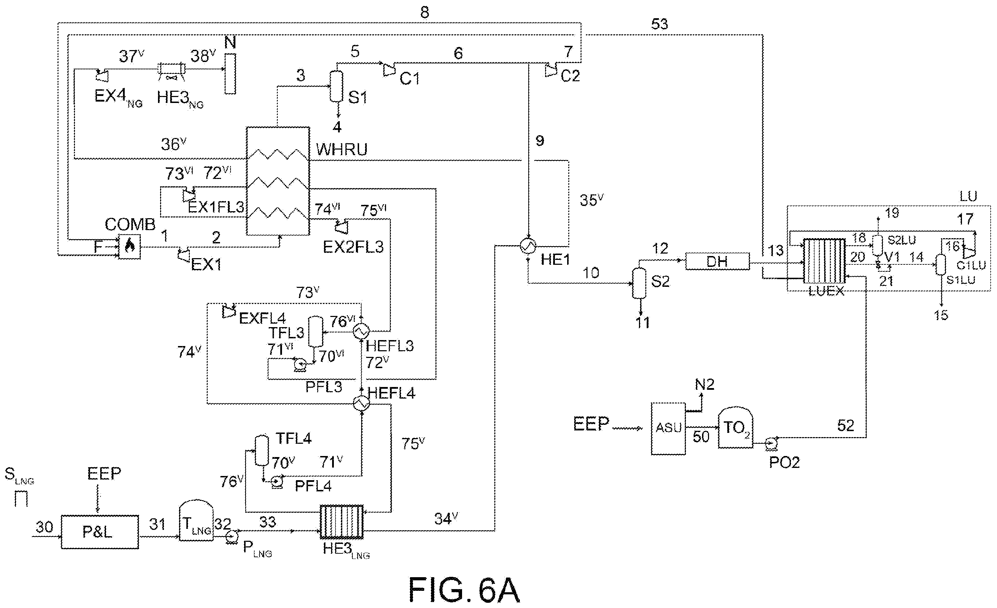

Figure 1 shows the general principle diagram of the method according to the present invention; figure 2A shows the diagram of a method according to a first embodiment of the present invention; figure 3A shows the diagram of a method according to a second embodiment of the present invention; figure 4A shows the diagram of a method according to a third embodiment of the present invention; figure 5A shows the diagram of a method according to a fourth embodiment of the present invention; figure 6A shows the diagram of a method according to a fifth embodiment of the present invention; figures 2B, 3B, 4B, 5B and 6B show respective variants of the embodiments in figures 2A, 3A, 4A, 5A and 6A where the CO₂ liquefaction unit comprises the use of a refrigerating bath and a refrigerating fluid.

### Detailed description of the invention

According to a first object of the invention, a process is described for accumulating electric power through the production and accumulation of liquefied natural gas and liquid oxygen.

In particular, the production and storage of liquefied natural gas starts with the liquefaction of a flow of natural gas 30 taken from a source S_{NG}, represented, for example, by the natural gas distribution network, inside a suitable purification and liquefaction unit P&L.

Advantageously, such purification and liquefaction are carried out using available electric power.

According to a preferred aspect of the present invention, such an electric power is available in excess with respect to the demand (EEP).

The flow of purified liquefied natural gas 31 thus obtained is stored in a special tank T_{LNG} at atmospheric pressure or at a higher pressure, from which an initial flow of liquefied natural gas 32 can be taken and pumped by a pump of the liquefied natural gas P_{LNG} obtaining a pumped flow of natural gas 33, which is used to implement the process according to the second object of the present invention.

In another aspect of the accumulation process, the production and storage of the liquid oxygen starts with the production of liquid oxygen from air (the *input* of which is not shown in the figures) in an Air Separation Unit (ASU) according to methods known in the art.

According to a particularly preferred aspect of the present invention, such a liquid oxygen production process can be carried out using the available electric power and preferably the electric power available in excess with respect to the demand (EEP).

A nitrogen flow (N₂) is also obtained from the Air Separation Unit (ASU), which can be freed into the atmosphere.

The flow of liquid oxygen 50 thus obtained is stored in a special tank at atmospheric pressure (TO₂) or at a higher pressure, from which an initial flow of oxygen 51 can be taken and pumped by means of an oxygen pump PO₂ to implement the generation process according to the second object of the present invention.

According to a second object of the invention, a process is described for producing electric power, natural gas and liquid carbon dioxide.

In particular, such a process comprises the following main steps:
- step I), wherein a pumped flow of liquefied natural gas 33 is subjected to a heat exchanging step obtaining a flow of partially vaporized natural gas 34,
- step II), wherein a flow of combusted gas 1 is produced from the high-pressure combustion of a fuel F, which combusted gas 1 is subjected to the sub-steps of:
   - sub-step. of expansion,
   - sub-step ii. of cooling,
   - sub-step iii. of dehydration,
   - sub-step iv. of producing a flow of liquid CO₂ 15 comprising the further cooling, purification and liquefaction, and
- step III), where a flow of liquid oxygen 51 or preferably a pumped flow of liquid oxygen 52 is made available.

For the purposes of the present invention, steps I), II) and III) stated above, can be conducted at the same time, in sequence or at different times and not necessarily in the listed order.

For the purposes of the present invention, the flow of liquefied natural gas LNG in step I) is a flow at a pressure from 15-400 barg and it is obtained according to the methods of the accumulation process of the first object described above.

For the purposes of the present invention, in step II) the flow of combusted gas 1 is produced inside a combustor COMB by combustion of a fuel F in the presence of a final flow of vaporized oxygen 54.

Once produced, the flow of combusted gas 1 is subjected to a sub-step i. of expansion with power production.

In particular, such a power can be produced as electric power by using a turbine EX1.

The flow of expanded combusted gas 2 thus obtained is then subjected to the sub-step ii. of cooling, obtaining a flow of cooled expanded combusted gas 3.

For the purposes of the present invention, such a sub-step ii. of cooling comprises one or more heat exchanges inside a Heat Recovery Unit WHRU.

As described above, one of such heat exchanges of cooling is conducted according to step I) with the pumped flow of liquid natural gas 33.

For the purposes of the present invention, a further heat exchange with the flow of expanded combusted gas 2 is conducted with a flow of oxygen as described hereinafter.

In particular, a pumped flow of liquid oxygen 52 is obtained after pumping, through a liquid oxygen pump PO₂, an initial flow of liquid oxygen 51 and it is used in the heat exchange with a flow with a main composition of CO₂ 13 as described further on, obtaining a flow of partially heated oxygen 53.

Said flow of partially heated oxygen 53 performs the further heat exchange in the Heat Recovery Unit (WHRU) with the flow of expanded combusted gas 2, thus obtaining a final flow of vaporized oxygen 54.

For the purposes of the present invention, sub step iii. of dehydration comprises the steps of:
- iiia) separation of the condensed water vapor,
- iiib) of compression,
- iiic) of cooling,
- iiid) of further separation of the condensed water vapor,
- iiie) of treatment in a Dehydration Unit DH.

In particular, in step iiia) the flow of cooled expanded combusted gas 3 is subjected to a separation in a first separator S1, from the bottom of which a first portion of condensed water vapor 4 is obtained and from the head of which a flow with a first level of dehydration 5 is obtained.

In step iiib), the flow with a first level of dehydration 5 is compressed in a first compressor C1 obtaining a flow with a first level of dehydration and compression 6.

For the purposes of the present invention, such a compression is implemented up to the pressure higher than the triple point of CO₂; e.g., at a pressure of less than 15 barg and preferably between 6 and 10 barg.

In step iiic), the flow with a first level of dehydration and compression 6 is subjected to a step of cooling by heat exchange in a first heat exchanger HE1 obtaining a cooled and compressed dehydrated flow 10.

According to an embodiment of the present invention, a portion 9 of said flow with a first level of compression and dehydration is subjected to step iiic), while a second portion 7 is subjected to compression in a second compressor C2 obtaining a compressed portion 8, which is sent back to the combustor COMB.

In a preferred aspect, such a compression is implemented up to the pressure of the combustion chamber or even higher.

In step iiid) the further separation of the water vapor is carried out on the cooled and compressed dehydrated flow 10 inside a second separator S2, from the bottom of which a second portion of condensed water vapor 11 is obtained and from the head of which a flow with a second level of dehydration 12 is obtained.

In step iiie) the flow with a second level of dehydration 12 is subjected to a final dehydration treatment inside a Dehydration Unit DH obtaining a flow with a main composition of CO₂ 13.

According to a preferred aspect, the treatment of the Dehydration Unit reduces the water content to a content of less than 50 ppm.

The flow with a main composition of CO₂ 13 is thus a different flow from the flow of combusted gas 1, the flow of expanded combusted gas 2 and the flow of cooled and expanded combusted gas 3, because it is enriched with CO₂.

For the purposes of the present invention, said flow with a main composition of CO₂ 13 is then subjected to a sub-step iv. of further cooling, purification and liquefaction inside a Liquefaction Unit LU thus obtaining a liquid CO₂ flow 15.

In particular, such a sub-step iv. comprises subjecting said with a main composition of CO₂ to the steps of:
- iva) cooling,
- ivb) separation,
- ivc) compression,
- ivd) further cooling,
- ive) further separation.

For the purposes of the present invention, one or more of such steps from iva) to ive) can be repeated to increase the separation of CO₂; the possible repetition of such steps is carried out depending on the needs, operating conditions, complexity and consequent cost, of the plant.

More specifically, step iva) of cooling is carried out inside a heat exchanger of the liquefaction unit LUEX by heat exchange with the pumped flow of liquid oxygen 52 mentioned above.

The flow of partially heated oxygen 53 is obtained from such a heat exchange and it is sent to the heat Recovery Unit WHRU for sub-step ii.

According to a first embodiment shown, for example, in figure 2A, said step iva) is conducted by direct heat exchange between said pumped flow of liquid oxygen 52 and said flow with a main composition of CO₂ 13.

From step iva) a cooled flow with a main composition of CO₂ 14 is obtained, from which, in step ivb), a liquid CO₂ flow 15 is separated from the bottom of a first separator of the Liquefaction Unit S1_{LU} and a first CO₂-rich gas phase 16 from the head.

In step ivc) said first CO₂-rich gas phase 16 is compressed in a first compressor of the Liquefaction Unit C1_{LU} obtaining a first compressed gas phase 17, which is then further cooled in a step ivd) inside the exchanger LUEX obtaining a first further cooled gas phase 18.

In step ive), from said first further cooled gas phase 18, a flow of uncondensed gas 19 is further separated from the head of a second separator of the Liquefaction Unit S2_{LU} and a CO₂-rich liquid phase 20 from the bottom of said second separator S2_{LU}; such a CO₂-rich liquid phase 20 is then reunited, after lamination by means of the lamination valve V1, with the cooled flow with a main composition of CO₂ 14 to be sent to the first separator S1_{LU} for step ivb).

As for step ive), the flow of uncondensed gas 19 separated from the head of the second separator of the Liquefaction unit S2_{LU}, this is freed into the atmosphere.

Such a flow of uncondensed gas 19 mainly consists of oxygen, argon, nitrogen and traces of carbon dioxide; the latter can possibly be removed before being released into the atmosphere.

According to a second embodiment, shown, for example, in figure 2B, step iva) of cooling in the heat exchanger of the Liquefaction Unit LUEX is carried out by indirect heat exchange between said pumped flow of liquid oxygen 52 and said flow with a main composition of CO₂ 13.

Said exchange is obtained by means of a refrigerating fluid RF.

In particular, such a sub-step, comprises the steps of:
- iv'0) obtaining by cooling in an exchanger of the Liquefaction Unit LUEX a cooled flow of a refrigerating fluid RF1,
- iv'a) cooling in a refrigerating bath RB said flow with a main composition of CO₂ 13 by heat exchange with said cooled flow of the refrigerating fluid RF1 obtaining a cooled flow with a main composition of CO₂ 14 and an evaporated flow of said refrigerating fluid RF2,
- iv'b) separating from said cooled flow with a main composition of CO₂ 14 a flow of liquid CO₂ 15 from the bottom of a first separator of the Liquefaction Unit S1_{LU} and a first CO₂-rich gas phase 16 from the head of said separator S1_{LU},
- iv'c) compressing said first CO₂-rich gas phase 16 in a first compressor of the Liquefaction Unit C1_{LU} obtaining a first compressed gas phase 17, which is then cooled in the same refrigerating bath RB by heat exchange with the cooled flow of the refrigerating fluid RF1 obtaining an evaporated flow of the refrigerating fluid RF2 and a first further cooled gas phase 18,
- iv'd) further separating, from said first further cooled gas phase 18, a flow of uncondensed gas 19 from the head of a second separator of the Liquefaction Unit S2_{LU} and a second CO₂-rich liquid phase 20 from the bottom, which is reunited, after lamination by means of the lamination valve V1, with the cooled flow with a main composition of CO₂ 14 obtained in step iv'a) and sent to the first separator S1_{LU} for step iv'b).

As for step iv'd), the flow of uncondensed gas 19 separated from the head of the second separator of the Liquefaction Unit S2_{LU}, this is freed into the atmosphere.

As described above, such a gas flow 19 mainly consists of oxygen, argon, nitrogen and traces of carbon dioxide; the latter can possibly be removed before being released into the atmosphere.

As for the evaporated flow of said refrigerating fluid RF2, this is then compressed in a compressor of the refrigerating fluid C_{FR} obtaining a compressed flow of refrigerating fluid RF3, which is cooled inside the exchanger of the Liquefaction Unit LUEX by heat exchange with the pumped flow of oxygen 52.

In a preferred aspect of the present invention, the cooling step of the flow mainly consisting of CO₂ 13 is carried out up to a temperature preferably from the triple point of CO₂ to -40°C.

As for the refrigerating fluid FR, this is represented by a suitable fluid, selected, for example, from the group comprising: CF4, Ar, etc.

In one aspect of the present invention, each of steps iiia), iiib) and iiic) can be repeated once or more times and not necessarily in sequence; for example, another step iiib) can be conducted, creating another similar flow.

According to a first embodiment, shown, for example, in figure 3A, by a first step iiib), a flow is obtained with a first level of dehydration and compression 6, which is cooled in a step iiic) in the heat exchanger HE1 obtaining another flow with a first level of cooled compression and dehydration 3'.

Such a flow 3' is then subjected to another step of separation iiia') inside another first separator S1' from the bottom of which another first portion of condensed water vapor 4' is obtained and from the head of which another flow with a first level of dehydration 5' is obtained, which is subjected to another step of compression iiib') in another first compressor C1' obtaining another flow with a first level of compression and dehydration 6'.

Such a further flow with a first level of compression and dehydration 6' is subjected to a subsequent heat exchange in another first heat exchanger HE1' obtaining a cooled and compressed dehydrated flow 10, preferably at a subcritical temperature.

From such a cooled and compressed flow 10, preferably at a subcritical temperature inside a second separator S2, a second portion of condensed water vapor 11 is obtained from the bottom and a flow with a second level of dehydration 12 from the head.

Such a flow with a second level of dehydration 12 is then sent to the Dehydration Unit DH to be subjected to a dehydration treatment and obtain a flow with a main composition of CO₂ 13.

According to a preferred aspect, the treatment of the Dehydration Unit reduces the water content to a content of less than 50 ppm.

Also according to this embodiment, the flow with a main composition of CO₂ 13 is thus a different flow from the flow of combusted gas 1, the flow of expanded combusted gas 2 and the flow of cooled and expanded combusted gas 3, because it is enriched with CO₂.

Such a flow with a main composition of CO₂ 13 is then sent to the Liquefaction Unit for producing a flow of liquid carbon dioxide 15 according to the above description.

For the purposes of the present invention, the heat exchanges carried out inside the first heat exchanger HE1 and the other first heat exchanger HE1' are carried out with the flow of partially vaporized natural gas 34 obtained after step I) or with a portion thereof.

In the present description, the flow of natural gas is subjected to successive steps of heat exchange with which it is gradually heated more and vaporized until obtaining a flow of completely vaporized natural gas to be re-introduced into the network.

As shown, for example, in figure 3A, a first portion of the flow of partially vaporized natural gas 35' is separated from the flow of partially vaporized natural gas 34, and used for the direct heat exchange in the first heat exchanger HE1 with the flow of gas with a first level of dehydration and compression 6, while a second portion of the partially or totally vaporized natural gas 37' is used for the direct heat exchange in the other first heat exchanger HE1' with the other gas flow with a first level of dehydration and compression 6'.

The first and second portions of flow of further vaporized natural gas 36' and 38' thus obtained are then reunited in a single flow of further vaporized natural gas 39', which is expanded in a first expander of the natural gas EX1_{GN} obtaining a flow of expanded natural gas 40', which can be introduced into the network.

Power production and electric power are obtained by using a suitable expansion turbine.

According to the embodiment described above, a recycle flow 7' is separated from the flow with a second level of dehydration 12 and pumped into a pump of the recycle flow P_{R} obtaining a pumped recycle flow 8', which is recycled to the combustor COMB, possibly after carrying out a further cooling step of the expanded gas 2 inside the Heat Recovery Unit WHRU, obtaining a heated pumped recycle flow 8".

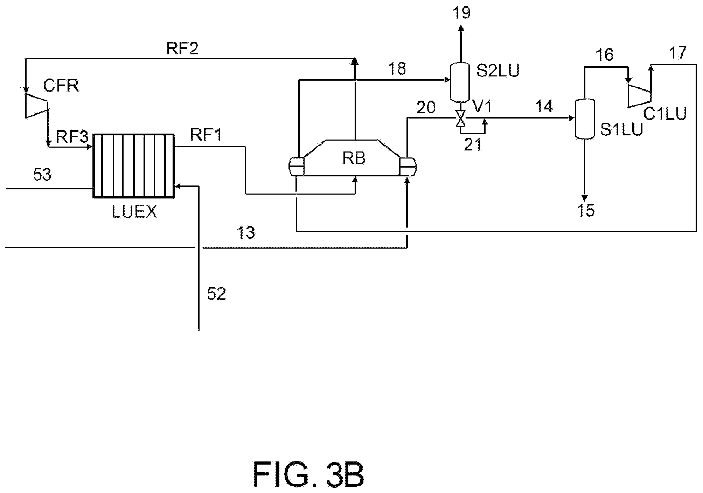

According to an alternative embodiment, for example, shown in figure 3B, step iva) of cooling in the exchanger of the CO₂ liquefaction unit LUEX is carried out by indirect heat exchange between said flow of high-pressure liquid oxygen 52 and said flow with a main composition of CO₂ 13.

Such an indirect heat exchange is carried out according to the above description with respect to figure 2B.

In the embodiment shown in figure 4A each of steps iiia), iiib) and iiic) can be repeated.

According to a further embodiment of the invention, step iiic) of cooling is carried out by indirect heat exchange with the flow of natural gas by using a first working fluid FL1.

According to another embodiment of the invention, step iiic) of cooling can be repeated and comprise both a direct heat exchange and an indirect heat exchange with the flow of natural gas.

For the purposes of the present invention, the direct heat exchange can include a flow of natural gas:
- vaporized,
- partially vaporized,
as will be described hereinafter.

In particular, the step of direct heat exchange is conducted inside a second heat exchanger HE2.

To this purpose, the pumped flow of natural gas 33 carries out a heat exchange with an exchange flow (cooled) of the first working fluid 77 inside a first heat exchanger of the liquefied natural gas HE1_{LNG} obtaining a flow of partially vaporized natural gas 34‴ and a cooled flow of the first working fluid 78, which is sent to a suitable tank T_{FL1}.

Said flow of partially vaporized natural gas 34‴ is then used and vaporized in step I) of heat exchange with the flow of expanded combusted gas 2 obtaining a flow of more vaporized natural gas 35''', which is sent to the second heat exchanger HE2 for the direct heat exchange step.

As described above, as for the indirect heat exchange, this is obtained by using a first working fluid FL1.

In particular, a flow with a first level of dehydration and compression 6 is obtained from a first step iiib), and then cooled in a step iiic) obtaining another flow with a first level of dehydration and cooled compression 3'.

Such a further flow with a first level of cooled dehydration and compression 3' is subjected to another step of separation inside another separator S1' from the bottom of which another first portion of condensed water vapor 4' is obtained and from the head of which another flow with a first level of dehydration 5' is obtained, which is subjected to a further step of compression in another first compressor C1' obtaining another flow with a first level of compression and dehydration 6'.

Such a further flow with a first level of compression and dehydration 6' is subjected to a further heat exchange in another first heat exchanger HE1' obtaining a flow with a third level of cooling 3".

Such a flow with a third level of cooling 3'' is then subjected to a further heat exchange in the second heat exchanger HE2 obtaining another cooled and compressed dehydrated flow 10', preferably at a subcritical temperature.

From such a further cooled and compressed dehydrated flow 10', preferably at a subcritical temperature inside a second separator S2, a second portion of condensed water vapor 11 is obtained from the bottom and a flow with a second level of dehydration 12 is obtained from the head.

Such a flow with a second level of dehydration 12 is then sent to the Dehydration Unit DH to be subjected to a dehydration treatment and obtain the flow with a main composition of CO₂ 13.

According to a preferred aspect, the treatment of the Dehydration Unit reduces the water content to a content of less than 50 ppm.

Also according to this embodiment, the flow with a main composition of CO₂ 13 is thus a different flow from the flow of combusted gas 1, the flow of expanded combusted gas 2 and the flow of cooled and expanded combusted gas 3, being enriched with CO₂.

Such a flow with a main composition of CO₂ 13 is then sent to the Liquefaction Unit for producing a flow of liquid carbon dioxide 15 according to the above description.

For the purposes of the present invention, step iiic) comprises direct and indirect heat exchanges with the flow of natural gas.

To this end, heat exchanges are carried out in the first heat exchanger HE1 and in the other first heat exchanger HE1' by using a working fluid.

More specifically, these are carried out with a flow of the first working fluid FL1 or with a portion thereof.

As shown for example in figure 4A, from a tank of the first working fluid T_{FL1}, an initial flow 70 is obtained, and pumped by a pump of the first working fluid P_{FL1} obtaining a first flow of the first working fluid 71.

A first portion 72 is separated from said first flow of the first working fluid 71 and sent to the first heat exchanger HE1 obtaining a first heated portion of said first working fluid 73, while a second portion 74 is sent to the other first heat exchanger HE1' obtaining a second heated portion of said first working fluid 75.

The first and second heated portions of the first working fluid 73,75 are reunited, forming a single heated flow of the first working fluid 76, which is expanded in an expander of the first working fluid EX_{FL1} obtaining the exchange flow of the first expanded working fluid 77, successively cooled in the heat exchanger of the liquefied natural gas HE_{LNG} by heat exchange with the pumped flow of natural gas 33 obtaining a flow of the cooled working fluid 78, which is sent to the tank T_{FL1}, and the flow of the partially vaporized pumped natural gas 34'''.

For the purposes of the present invention, the first working fluid is represented by a fluid selected from the group comprising: water, ammonia, ethane, propane, ethylene or it can be represented by the fluid IMR, described, for example, in the international patent application WO 2020/075112 (Saipem S.p.A.).

As for the direct heat exchanges, these are conducted inside the second heat exchanger HE2.

To this end, the flow of heated partially vaporized natural gas 34‴ is subjected inside the Heat Recovery Unit WHRU to step I), obtaining a flow of more vaporized natural gas 35‴, which is thus sent to the second heat exchanger HE2.

The flow of further vaporized natural gas 36‴ thus obtained is then expanded in a second expander of the natural gas EX2_{GN} obtaining a flow of expanded natural gas 37''', which is further heated in a first heat exchanger of the natural gas HE1_{NG} obtaining a flow of heated and expanded natural gas 38''', which can be introduced into the network N.

In the embodiment in figure 4A there is comprised the separation of the recycle flow 7', which is recycled to the combustor COMB according to the above description.

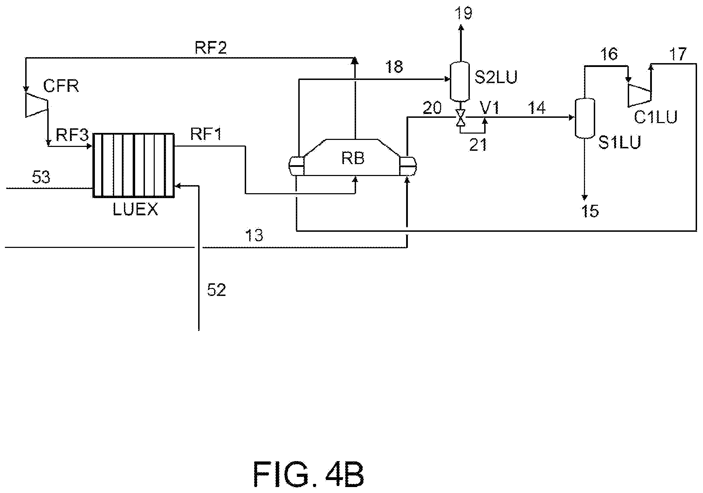

According to an alternative embodiment, for example, shown in figure 4B, step iva) of cooling in the exchanger of the CO₂ liquefaction unit LUEX is carried out by indirect heat exchange between said pumped flow of liquid oxygen 52 and said flow with a main composition of CO₂ 13.

Such an indirect heat exchange is conducted according to the above description with respect to figures 2B and 3B.

According to an alternative embodiment, the heat exchange in step I) is an indirect heat exchange between said flow of expanded combusted gas 2 obtained in sub-step i. and the pumped flow of liquefied natural gas 33.

In particular, such an indirect heat exchange is carried out by means of a second working fluid FL2, which is cooled by heat exchange with the pumped flow of liquefied natural gas 33 inside a second heat exchanger of the liquefied natural gas EX2_{LNG}.

For the purposes of the present invention, the heat exchange step between the second working fluid FL2 and the expanded combusted gas 2 can comprise one or more sub-steps of heat exchange.

In a preferred aspect of the present invention, the present alternative embodiment is a variant of the process described above with reference to figure 2A.

As shown for example in figure 5A, from a tank of a second working fluid T_{FL2}, an initial flow of the second working fluid 70'' is obtained and pumped by a pump of the second working fluid P_{FL2} obtaining a flow with higher pressure 71".

Such a flow with higher pressure of the second working fluid 71'' is heated in a heat exchanger of the second working fluid HE_{FL2} obtaining a heated flow 72''.

Said heated flow 72'' is then used in a cooling step of the expanded combusted gas 2 inside the Heat Recovery Unit WHRU obtaining a more heated flow of the second working fluid 73".

Said more heated flow 73'' can be expanded in a first expander of the second working fluid EX1_{FL2} with power production and the expanded flow 74'' thus obtained is used in a further cooling step of the expanded combusted gas 2 obtaining a further heated flow of the second working fluid 75''.

Such a further heated flow 75'' can be further expanded in a second expander of the second working fluid EX2_{FL2} with power production and the further heated and further expanded flow 76'' thus obtained is employed for the heat exchange with the flow of the second high-pressure working fluid 71'' inside the exchanger of the second working fluid HE_{FL2}.

An exchange flow 77' (cooled) is obtained, which is further cooled by heat exchange with the pumped flow of liquefied natural gas 33 inside the second heat exchanger of the liquefied natural gas HE_{LNG2} obtaining a cooled flow of the second working fluid 78", which is stored in a dedicated tank of the second working fluid T_{FL2} at atmospheric pressure or at a higher pressure.

For the purposes of the present invention, the second working fluid is represented by a fluid selected from the group comprising: water, ammonia, ethane, propane, ethylene or it can be represented by the fluid IMR, described, for example, in the international patent application WO 2020/075112 (Saipem S.p.A.).

In the embodiment shown in figure 5A, after the heat exchange with the second working fluid in the second heat exchanger of the liquefied natural gas HE2_{LNG}, the flow of partially vaporized natural gas 34^{iv} thus obtained, is used in step iiic) described above, inside the first heat exchanger HE1 obtaining a flow of more vaporized natural gas 35^{iv}.

Said flow of natural gas 35^{iv} is then expanded in a second expander of the natural gas EX2_{NG} obtaining an expanded flow 36^{iv}, which is then further heated in a third heat exchanger of the natural gas HE3_{NG} obtaining a final flow of vaporized natural gas 37^{iv}, which is reintroduced into the network N.

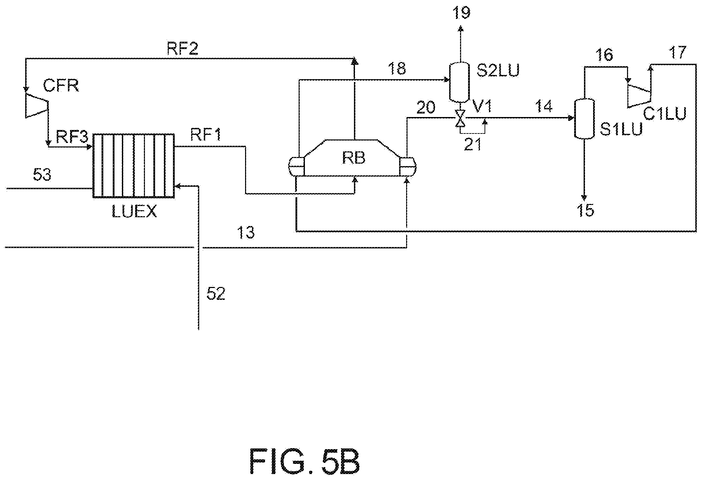

According to an alternative embodiment, for example, shown in figure 5B, step iva) of cooling in the exchanger of the CO₂ liquefaction unit LUEX is carried out by indirect heat exchange between said pumped flow of liquid oxygen 52 and said flow with a main composition of CO₂ 13.

Such an indirect heat exchange is carried out according to the above description with respect to figures 2B, 3B and 4B.

The embodiment described herein above is particularly suitable to the use of subcritical turbines (with respect to the condition of CO₂).

According to an alternative embodiment of the present invention shown, for example, in figure 6A, the heat exchange in step I) is an indirect heat exchange between said flow of expanded combusted gas 2 produced in sub-step i. and the pumped liquefied natural gas 33.

In particular, said indirect heat exchange is mediated by two working fluids.

For the purposes of the present invention, one of the two working fluids, which will be referred to as the third working fluid FL3, will carry out a heat exchange with the flow of expanded combusted gas 2 and a second heat exchange with another working fluid, which will be referred to as the fourth working fluid FL4.

For the purposes of the present invention, the step of heat exchange between said third working fluid FL3 and the expanded combusted gas 2 can comprise one or more sub-steps of heat exchange.

In turn, the fourth working fluid FL4, after carrying out the heat exchange with the third working fluid FL3, carries a second heat exchange with the pumped flow of liquefied natural gas 33.

In a preferred aspect of the present invention, such an embodiment is a variant of the processes described with reference to figures 2A and 5A.

With particular reference to figure 6A, from a tank of a fourth cooled working fluid T_{FL4} in which it is stored at ambient pressure or at a slightly higher pressure, an initial flow 70^{v}, is obtained, which is pumped by a pump of the fourth working fluid P_{FL4} obtaining a flow of the fourth working fluid at a higher pressure 71^{v}.

Such a flow with a higher pressure of the fourth working fluid 71^{v} releases frigories in a heat exchanger of the fourth working fluid HE_{FL4} obtaining a flow of the fourth partially heated working fluid 72^{v}.

Said partially heated flow 72^{v} is then used in a heat exchange step with a flow of the third working fluid 75^{vi} in a heat exchanger of the third working fluid HE_{FL3} obtaining a further heated flow 73^{v} of the fourth working fluid FL4.

Said further heated flow 73^{v} of the fourth working fluid is then expanded in an expander of the fourth working fluid EX_{FL4} obtaining an expanded flow of the fourth working fluid 74^{v}, which, after a step of heat recovery in the exchanger of the fourth working fluid HE_{FL4} provides an exchange flow (cooled) of the fourth working fluid 75^{v}, which is sent to the exchanger of the liquefied natural gas HE_{LNG} for further cooling and condensing.

The condensed flow of the fourth working fluid 76^{v} thus obtained, is then stored in the respective tank of the fourth working fluid T_{FL4}.

As for the condensed flow of the third working fluid 76^{vi} obtained after condensation in the heat exchanger of the third working fluid HE_{FL3}, this is stored in a dedicated tank T_{FL3} at ambient pressure or at a slightly higher pressure.

From said tank T_{FL3}, an initial flow of the third working fluid FL3 70^{vi} is obtained, which is pumped by a pump of the third working fluid P_{FL3} obtaining a flow with a higher pressure 71^{vi}.

Such a flow with a higher pressure of the third working fluid 71^{vi} is used in step I) of heat exchange with the flow of expanded combusted gas 2 inside the Heat Recovery Unit WHRU obtaining a partially heated flow of said third working fluid 72^{vi}.

Said partially heated flow of the third working fluid 72^{vi} can then be expanded in a first expander of the third working fluid EX1_{FL3} obtaining an expanded flow 73^{vi}.

Said expanded flow 73^{vi} is then used in a second heat exchange step with the flow of expanded combusted gas 2 inside the Heat Recovery Unit WHRU obtaining a further heated flow of the third working fluid 74^{vi}.

Said further heated flow of the third working fluid 74^{vi} can be then expanded in a second expander of the third working fluid EX2_{FL3} obtaining a further expanded flow 75^{vi}, which is used in the heat exchange step with the flow 72^{v} in the heat exchanger of the third working fluid HE_{FL3}.

In the embodiment shown in figure 6A, besides the indirect exchange, a direct heat exchange is also carried out between the liquefied natural gas and the expanded combusted gas 2.

In fact, after the heat exchange with the fourth working fluid FL4 inside the third heat exchanger of the liquefied natural gas HE3_{LNG}, the flow of partially or completely vaporized natural gas 34^{v} obtained is used in step iiic) inside the first heat exchanger HE1 obtaining a flow of more vaporized natural gas 35^{v}.

Said flow of natural gas 35^{v} is then used in a direct heat exchange step with the expanded combusted gas 2 inside the Heat Recovery Unit WHRU obtaining a flow of heated natural gas 36^{v}.

Said heated flow 36^{v} is then expanded in a fourth expander of the natural gas EX4_{NG} obtaining an expanded heated flow 37^{v}, which is then further heated in a third heat exchanger of the natural gas HE337v_{NG} obtaining a final flow of vaporized natural gas 38^{v}, which is reintroduced into the network N.

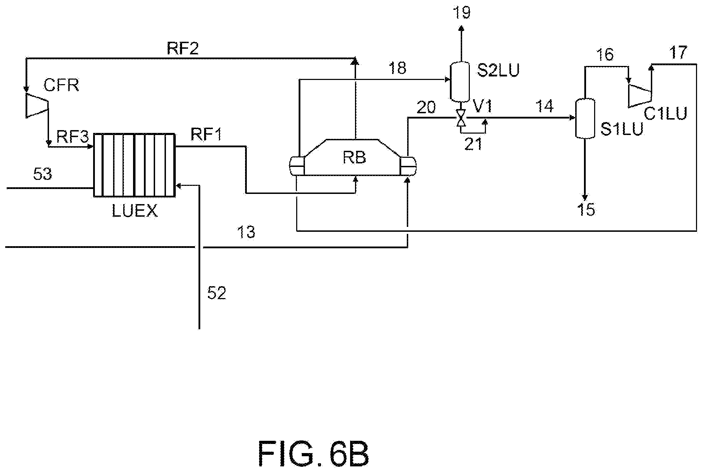

According to an alternative embodiment, for example, shown in figure 6B, step iva) of cooling in the exchanger of the CO₂ Liquefaction Unit LUEX is carried out by indirect heat exchange between said pumped flow of liquid oxygen 52 and said flow with a main composition of CO₂ 13.

Such an indirect heat exchange is carried out according to the above description with respect to figures 2B, 3B, 4B and 5B.

Also according to this embodiment, the flow with a main composition of CO₂ 13 is thus a different flow from the flow of combusted gas 1, the flow of expanded combusted gas 2 and the flow of cooled and expanded combusted gas 3, because it is enriched with CO₂.

For the purposes of the present invention, the third working fluid can be represented by a fluid selected from the group comprising: water, ammonia, propane, etc.

For the purposes of the present invention, the fourth working fluid can be represented by a fluid selected from the group comprising: ethane, ethylene, propane, etc. and which, in a preferred aspect, is represented by the fluid IMR, described, for example, in the international patent application WO 2020/075112 (Saipem S.p.A.).

From the above description of the present invention, the advantages offered by the present invention will be immediately apparent to those skilled in the art.

By virtue of the process and the method of the present invention, a storage of gas and the stabilization of both the gas and electric distribution networks can be obtained at the same time, also obtaining the sequestration of CO₂ which would otherwise be introduced into the atmosphere if the electric power were produced using traditional systems.

Various technologies exist for liquefying the natural gas, each characterized by a different system complexity and energy expenditure for condensing LNG, just as different types of machines can be applied to the operations of recovering energy from the fumes produced in the *Oxyfuel Combustion.*

Considering the fact that LNG is produced from gas taken at the network pressure, and that only limited operations of upgrading are required, an energy expenditure at 0.2 kWh/kg is estimated for the production thereof.

Based on these figures, the embodiments of the process of the present invention offer an efficiency as compared to the thermal power introduced (obtained only from the combustion) varying between 80% and 55%, and a global efficiency, i.e., also considering the electric power needed for the production of LNG, varying between 50% and 35%.

The suggested systems interface with both gas and electric power networks and are configured as damping/stabilization systems by means of energy accumulation.

## Claims

1. A process for producing electric power, for producing natural gas and liquid carbon dioxide, comprising the steps:
- step I), wherein a flow of pumped liquefied natural gas LNG (33) is subjected to a heat exchanging step obtaining a flow of partially vaporized natural gas NG (34),
- step II), wherein a flow of combusted gas (1) is produced from the high-pressure combustion of a fuel F and subjected to the sub-steps of:
- sub-step i. of expansion, obtaining an expanded combusted gas (2) with power production,
- sub-step ii. of cooling,
- sub-step iii. of dehydration,
- sub-step iv. of further cooling, purifying, and liquefying, obtaining a flow of liquid CO₂ (15) and a flow of partially heated oxygen (53), and
- step III), wherein a flow of pumped liquid oxygen (52) is made available,
wherein in step I) the heat exchange is carried out with the flow of expanded combusted gas (2) obtained in sub-step i., and in sub-step iv. of further cooling, the flow of pumped liquid oxygen (52) of step III) is used to obtain said flow of partially heated oxygen (53) .

2. A process according to the preceding claim, wherein said sub-step ii. further comprises a step of heat exchange with the flow of partially heated liquid oxygen (53) obtained in sub-step iv.

3. A process according to claim 1 or 2, wherein after step I), the flow of partially vaporized natural gas (34) is subjected to a step of expansion with power production.

4. A process according to any one of the preceding claims, wherein said sub-step iii. of dehydration comprises the steps:
iiia) of separating a first portion of condensed water vapor (4) and a flow with a first level of dehydration (5) in a separator S1,
iiib) of compression in a first compressor C1 obtaining a flow with a first level of compression and dehydration (6),
iiic) of cooling in a first heat exchanger HE1 obtaining a compressed, cooled, and dehydrated flow (10), and
iiid) of further separating a second portion of condensed water vapor (11) and a flow with a second level of dehydration (12) in a second separator S2,
iiie) of treatment in a Dehydration Unit DH obtaining a flow with a main composition of CO₂ (13), wherein each of said steps iiib), iiic) and iiid) may be repeated several times.

5. A process according to the preceding claim, wherein a second portion (7) of the flow at a first level of compression and dehydration obtained in step iiib) is separated and recycled to the combustor COMB after a compression step in a second compressor C2 obtaining a compressed recycle portion (8).

6. A process according to any one of the preceding claims, wherein said sub-step iv. of further cooling, purifying, and liquefying comprises the steps of:
iva) cooling said flow with a main composition of CO₂ (13) in a heat exchanger of the CO₂ Liquefaction unit LUEX obtaining a cooled flow with a main composition of CO₂ (14),
ivb) separating, from said cooled flow with a main composition of CO₂ (14), a flow of liquid CO₂ (15) from the bottom of a first separator of the Liquefaction Unit S1_{LU} and a first CO₂-rich gas phase (16) from the head of said first separator S1_{LU},
ivc) compressing said first CO₂-rich gas phase (16) in a first compressor of the Liquefaction Unit C1_{LU} obtaining a first compressed gas phase (17),
ivd) further cooling said first compressed gas phase (17) in said CO₂ liquefaction unit LUEX by heat exchange with the pumped flow of oxygen (52) obtaining a further cooled first gas phase (18) and said flow of partially heated oxygen (53),
ive) further separating, from said first further cooled gas phase (18), a flow of uncondensed gas (19) from the head of a second separator of the Liquefaction Unit S2_{LU} and a CO₂-rich liquid phase (20) from the bottom, reunited, after lamination by means of the lamination valve V1, with the cooled flow with a main composition of CO₂ (14) obtained in step iva).

7. A process according to the preceding claim, wherein said step ivd) of further cooling is a step iv'd) carried out by indirect heat exchange with said pumped flow of liquid oxygen (52).

8. A process according to the preceding claim, wherein said step iv'd) comprises the sub-steps of:
iv'0) obtaining by cooling in an exchanger of the liquefaction unit LUEX a cooled flow of a refrigerating fluid RF1 by heat exchange with said pumped flow of oxygen (52),
iv'a) cooling in a refrigerating bath RB said flow with a main composition of CO₂ (13) by heat exchange with said cooled flow of refrigerating fluid RF1 obtaining a cooled flow with a main composition of CO₂ (14) and an evaporated flow of said refrigerating fluid RF2,
iv'b) separating, from said cooled flow with a main composition of CO₂ (14), a flow of liquid CO₂ (15) from the bottom of a first separator of the Liquefaction Unit S1_{LU} and a first CO₂-rich gas phase (16) from the head of said first separator of the Liquefaction Unit S1_{LU},
iv'c) compressing said first CO₂-rich gas phase (16) in a first compressor of the Liquefaction Unit C1_{LU} obtaining a first compressed gas phase (17),
iv'd) further cooling said first compressed gas phase in the refrigerating bath RB by heat exchange with the cooled flow of the refrigerating fluid RF1 obtaining an evaporated flow of the refrigerating fluid RF2 and a further cooled gas phase (18),
iv'e) further separating, from said first further cooled gas phase (18), a flow of uncondensed gas (19) from the head of a second separator of the Liquefaction Unit S2_{LU} and a second CO₂-rich liquid phase (20) from the bottom, which is reunited, after lamination by means of the lamination valve V1, with the cooled flow with a main composition of CO₂ (14) obtained in step iv'a).

9. A process according to any one of claims from 4 to 8, wherein in step iiic) said cooling is obtained by heat exchange with the flow of partially vaporized natural gas (34) obtained in step I) or with a portion of said flow of more vaporized natural gas (35',37').

10. A process according to any one of claims 4 to 9, wherein a plurality of steps iiib), iiic) and iiid) is carried out and before said step iiie), a recycle portion (7') is separated and pumped by means of a pump P_{R} obtaining a high-pressure recycle portion (8'), which is used in a step of heat exchange with said flow of expanded combusted gas (2) obtaining a heated recycle flow (8'') recycled to the combustor COMB.

11. A process according to any one of claims 4 to 10, wherein in step iiic) said cooling is obtained by heat exchange with one or more portions of a first working fluid (72,74), which is cooled by heat exchange with the pumped flow of liquefied natural gas (33).

12. A process according to any one of the preceding claims, wherein said heat exchange of step I) is an indirect heat exchange between said flow of expanded combusted gas (2) obtained in sub-step i. and said pumped flow of liquefied natural gas (33).

13. A process according to the preceding claim, wherein said indirect heat exchange comprises a step of heat exchange between said pumped flow of liquefied natural gas (33) and a flow of a second working fluid (77'') obtaining a cooled flow of said second working fluid (78'').

14. A process according to the preceding claim, wherein one or more steps of heat exchange are carried out with the flow of expanded combusted gas (2) obtaining respective heated flows of said second working fluid (73'',75''), wherein each of said heated flows of said second working fluid (73'',75'') is subjected to a step of expansion in a respective first and/or possibly second expander of the second working fluid EX1_{FL2}, EX2_{LF2} with power production.

15. A process according to any one of claims from 4 to 14, wherein in step iiic) said cooling is obtained by heat exchange with a flow of natural gas (34^{v}) obtained after heat exchange with a flow of said second working fluid (75^{v}) obtaining a flow of partially heated natural gas (35^{v}) which is used in step I).

16. A process according to any one of the preceding claims, wherein said pumped flow of liquid oxygen (52) and said pumped flow of liquefied natural gas (33) are obtained from respective amounts of liquid oxygen and liquefied natural gas produced by using electric power available in excess.

17. A plant for producing electric power, natural gas, and liquid carbon dioxide, comprising:
I) a liquefied natural gas regasification line comprising one heat exchanger,
II) an energy production unit comprising a combustor, preferably an oxy-combustor, an expander, and a Waste Heat Recovery Unit (WHRU),
III) a vaporized oxygen production unit comprising one heat exchanger,
IV) a CO₂ cooling, purifying, and liquefying unit, comprising one heat exchanger, inside a CO₂ Liquefaction Unit (LUEX),
V) a liquid oxygen preparation unit comprising an air separation unit (ASU),
VI) a liquefied natural gas preparation unit, comprising a Purification and Liquefaction Unit (P&L). wherein:
- the heat exchanger of the liquefied natural gas regasification line is represented by said Waste Heat Recovery Unit (WHRU) and
- the heat exchanger of the vaporized oxygen production unit is represented by the heat exchanger of a CO₂ Liquefaction Unit (LUEX).

## Patentansprüche

1. Verfahren zur Erzeugung von Strom, zur Erzeugung von Erdgas und flüssigem Kohlendioxid, umfassend die folgenden Schritte:
Schritt I), wobei ein Fluss von gepumptem verflüssigtem Erdgas LNG (33) einem Wärmeaustauschschritt unterzogen wird, wodurch ein Fluss von teilweise verdampftem Erdgas NG (34) erhalten wird,
Schritt II), wobei ein Fluss von verbranntem Gas (1) durch Hochdruckverbrennung eines Brennstoffs F erzeugt wird und den folgenden Unterschritten unterzogen wird:
- Unterschritt i. Expansion, wobei ein expandiertes verbranntes Gas (2) mit Stromerzeugung erhalten wird,
- Unterschritt ii. Kühlung,
- Unterschritt iii. von Entwässerung,
- Unterschritt iv. noch Kühlen, Reinigen, und
Verflüssigen, wobei ein Fluss von flüssigem CO₂ (15) und ein Fluss von teilweise erwärmtem Sauerstoff (53) erhalten werden, und
Schritt III), wobei ein Fluss von gepumptem flüssigem Sauerstoff (52) bereitgestellt wird,
wobei in Schritt I) der Wärmeaustausch mit dem Fluss von expandiertem verbranntem Gas (2), der in Unterschritt i. erhalten wurde, durchgeführt wird, und im Unterschritt iv. der weiteren Kühlung,
der Fluss von gepumptem flüssigem Sauerstoff (52) von Schritt III)
verwendet wird, um den Fluss von teilweise erwärmtem Sauerstoff (53) zu erhalten.

2. Verfahren nach dem vorhergehenden Anspruch, wobei der Unterschritt ii. ferner einen Schritt des Wärmeaustauschs mit dem Fluss von teilweise erwärmtem flüssigem Sauerstoff (53) umfasst, der in Unterschritt iv erhalten wurde.

3. Verfahren nach Anspruch 1 oder 2, wobei nach Schritt I) der Fluss von teilweise verdampftem Erdgas (34) einem Expansionsschritt mit Stromerzeugung unterzogen wird.

4. Verfahren nach einem der vorhergehenden Ansprüche, wobei der Unterschritt iii. der Entwässerung die folgenden Schritte umfasst:
iiia) Trennen eines ersten Abschnitt von kondensiertem Wasserdampf (4) und eines Flusses mit einem ersten Entwässerungsniveau (5) in einem Abscheider S1,
iiib) Verdichtung in einem ersten Verdichter C1, wodurch ein Fluss mit einem ersten Verdichtungs- und Entwässerungsniveau (6) erhalten wird,
iiic) Kühlen in einem ersten Wärmetauscher HE1, wodurch ein verdichteter, gekühlter und entwässerter Fluss (10) erhalten wird, und
iiid) noch Trennen eines zweiten Abschnitt von kondensiertem Wasserdampf (11) und eines Flusses mit einem zweiten Entwässerungsniveau (12) in einem zweiten Abscheider S2,
iiie) Behandeln in einer Entwässerungseinheit DH, wodurch ein Fluss mit einer Hauptzusammensetzung aus CO₂ (13) erhalten wird, wobei jeder dieser Schritte iiib), iiic) und iiid) mehrfach wiederholt werden kann.

5. Verfahren nach dem vorhergehenden Anspruch, wobei ein zweiter Abschnitt (7) des Flusses mit einem ersten Verdichtungs- und Entwässerungsniveau, das in Schritt iiib) erhalten wurde, getrennt wird und nach einem Verdichtungsschritt in einem zweiten Verdichter C2 als verdichteter Rückführungsabschnitt (8) zu dem Brenner COMB in den Kreislauf zurückgeführt wird.

6. Verfahren nach einem der vorhergehenden Ansprüche, wobei der Unterschritt iv. von noch Kühlen, Reinigen und Verflüssigen die folgenden Schritte umfasst:
iva) Kühlen des Flusses mit einer Hauptzusammensetzung aus CO₂ (13) in einem Wärmetauscher der CO₂-Verflüssigungseinheit LUEX, wodurch ein gekühlter Fluss mit einer Hauptzusammensetzung aus CO₂ (14) erhalten wird,
ivb) Trennen aus dem gekühltem Fluss mit einer Hauptzusammensetzung aus CO₂ (14) eines Flusses von flüssigem CO₂ (15) von dem Boden eines ersten Abscheiders der Verflüssigungseinheit S1_{LU} und einer ersten CO₂-reichen Gasphase (16) von dem Kopf des ersten Abscheiders S1_{LU},
ivc) Verdichten der ersten CO₂-reichen Gasphase (16) in einem ersten Verdichter der Verflüssigungseinheit C1_{LU}, wodurch eine erste verdichtete Gasphase (17) erhalten wird,
ivd) noch Kühlen der ersten verdichteten Gasphase (17) in der CO₂-Verflüssigungseinheit LUEX durch Wärmeaustausch mit dem gepumpten Fluss von Sauerstoff (52), wodurch eine weiter gekühlte erste Gasphase (18) und Fluss von teilweise erwärmtem Sauerstoff (53) erhalten werden,
ive) noch Trennen aus der weiter gekühlten ersten Gasphase (18) eines Flusses von unkondensiertem Gas (19) von dem Kopf eines zweiten Abscheiders der Verflüssigungseinheit S2_{LU} und einer CO₂-reichen Flüssigphase (20) von dem Boden, der nach Laminierung mittels des Laminierungsventils V1 mit dem gekühlten Strom mit einer Hauptzusammensetzung aus CO₂ (14), der in Schritt iva) erhalten wird, wiedervereinigt wird.

7. Verfahren nach dem vorhergehenden Anspruch, wobei der Schritt ivd) des weiteren Kühlen ein Schritt iv'd) ist, der durch indirekten Wärmeaustausch mit dem gepumptem Fluss von flüssigem Sauerstoff (52) durchgeführt wird.

8. Verfahren nach dem vorhergehenden Anspruch, wobei der Schritt iv'd) die folgenden Unterschritte umfasst:
iv'0) Gewinnen durch Kühlen in einem Wärmetauscher der Verflüssigungseinheit LUEX eines gekühlten Flusses eines Kältemittels RF1 durch Wärmeaustausch mit dem gepumptem Fluss von Sauerstoff (52),
iv'a) Kühlen in einem Kühlbad RB des Flusses mit einer Hauptzusammensetzung aus CO₂ (13) durch Wärmeaustausch mit dem gekühltem Fluss des Kältemittels RF1, wodurch ein gekühlter Fluss mit einer Hauptzusammensetzung aus CO₂ (14) und ein verdampfter Fluss des Kältemittels RF2 erhalten werden,
iv'b) Trennen aus dem gekühltem Fluss mit einer Hauptzusammensetzung aus CO₂ (14) eines Flusses von flüssigem CO₂ (15) von dem Boden eines ersten Abscheiders der Verflüssigungseinheit S1_{LU} und einer ersten CO₂-reichen Gasphase (16) von dem Kopf des ersten Abscheiders der Verflüssigungseinheit S1_{LU},
iv'c) Verdichten der ersten CO₂-reichen Gasphase (16) in einem ersten Verdichter der Verflüssigungseinheit C1_{LU}, wodurch eine erste verdichtete Gasphase (17) erhalten wird,
iv'd) weiter Kühlen der ersten verdichteten Gasphase in dem Kühlbad RB durch Wärmeaustausch mit dem gekühlten Fluss des Kältemittels RF1, wodurch ein verdampfter Fluss des Kältemittels RF2 und eine weiter gekühlte Gasphase (18) erhalten werden,
iv'e) weiter Trennen aus der weiter gekühlten ersten Gasphase (18) eines Flusses von nicht kondensiertem Gas (19) von dem Kopf eines zweiten Abscheiders der Verflüssigungseinheit S2_{LU} und einer zweiten CO₂-reichen Flüssigphase (20) von dem Boden, der, nach Laminierung durch das Laminierungsventil V1 mit dem Fluss mit einer Hauptzusammensetzung aus CO₂ (14), der in Schritt iv'a) erhalten wird, wiedervereinigt wird.

9. Verfahren nach einem der Ansprüche 4 bis 8, wobei in Schritt iiic) das Kühlen durch Wärmeaustausch mit dem Fluss von teilweise verdampftem Erdgas (34), der in Schritt I) erhalten wird oder mit einem Abschnitt des Flusses von mehr verdampften Erdgas (35', 37') erhalten wird.

10. Verfahren nach einem der Ansprüche 4 bis 9, wobei eine Mehrzahl von Schritten iiib), iiic) und iiid) durchgeführt wird und vor dem Schritt iiie) ein Rückführungsabschnitt (7') getrennt wird und mittels einer Pumpe PR gepumpt wird, wodurch ein Hochdruck-Rückführungsabschnitt (8') erhalten wird, der in einem Schritt des Wärmeaustauschs mit dem Fluss von expandiertem verbranntem Gas (2) verwendet wird, um einen erwärmten Rückführungsfluss (8") zu erhalten, der zum Brenner COMB in den Kreislauf zurückgeführt wird.

11. Verfahren nach einem der Ansprüche 4 bis 10, wobei in Schritt iiic) das Kühlen durch Wärmeaustausch mit einem oder mehreren Abschnitten einer ersten Arbeitsflüssigkeit (72, 74) erhalten wird, die durch Wärmeaustausch mit dem gepumpten Fluss von verflüssigtem Erdgas (33) gekühlt wird.

12. Verfahren nach einem der vorhergehenden Ansprüche, wobei der Wärmeaustausch von Schritt I) ein indirekter Wärmeaustausch zwischen dem Fluss von expandiertem verbranntem Gas (2), der in Unterschritt i. erhalten wird, und dem gepumptem Fluss von verflüssigtem Erdgas (33) erhalten wird.

13. Verfahren nach dem vorhergehenden Anspruch, wobei der indirekte Wärmeaustausch einen Schritt des Wärmeaustauschs zwischen dem gepumptem Fluss von verflüssigtem Erdgas (33) und einem Fluss einer zweiten Arbeitsflüssigkeit (77") umfasst, wodurch ein gekühlter Fluss der zweiten Arbeitsflüssigkeit (78") erhalten wird.

14. Verfahren nach dem vorhergehenden Anspruch, wobei ein oder mehrere Schritte des Wärmeaustauschs mit dem Fluss von expandiertem verbranntem Gas (2) durchgeführt werden, wodurch jeweils erwärmte Flüsse der zweiten Arbeitsflüssigkeit (73", 75") erhalten werden, wobei jeder der erwärmten Flüsse der zweiten Arbeitsflüssigkeit (73", 75") einem Expansionsschritt in einem jeweiligen ersten und/oder gegebenenfalls zweiten Expander der zweiten Arbeitsflüssigkeit EX1_{FL2}, EX2_{LF2} mit Stromerzeugung unterzogen wird.

15. Verfahren nach einem der Ansprüche 4 bis 14, wobei in Schritt iiic) das Kühlen durch Wärmeaustausch mit einem Fluss von Erdgas (34v) erhalten wird, der nach Wärmeaustausch mit einem Fluss der zweiten Arbeitsflüssigkeit (75v) erhalten wird, wodurch ein Fluss von teilweise erwärmtem Erdgas (35v) erhalten wird, der in Schritt I) verwendet wird.

16. Verfahren nach einem der vorhergehenden Ansprüche, wobei der gepumpte Fluss von flüssigem Sauerstoff (52) und der gepumpte Fluss von verflüssigtem Erdgas (33) aus jeweiligen Mengen von flüssigem Sauerstoff und verflüssigtem Erdgas erhalten werden, die mit überschüssig verfügbarem Strom erzeugt werden.

17. Anlage zur Erzeugung von Strom, Erdgas und flüssigem Kohlendioxid, umfassend:
I) eine Regasifizierungsleitung für verflüssigtes Erdgas umfassend einen Wärmetauscher,
II) eine Stromerzeugungseinheit umfassend einen Brenner, vorzugsweise einem Oxy-Brenner, einem Expander und einer Abwärmerückgewinnungseinheit (WHRU),
III) eine Erzeugungseinheit für verdampften Sauerstoff umfassend einen Wärmetauscher,
IV) eine CO₂ Kühlung-Reinigung und Verflüssigungseinheit umfassend einen Wärmetauscher innerhalb einer Verflüssigungseinheit (LUEX),
V) eine Herstellungseinheit von flüssigem Sauerstoff umfassend eine Luftzerlegungseinheit (ASU),
VI) eine Herstellungseinheit von verflüssigtem Erdgas umfassend eine Reinigungs- und Verflüssigungseinheit (P&L),
wobei:
der Wärmetauscher der Regasifizierungsleitung für verflüssigtes Erdgas durch die Abwärmerückgewinnungseinheit (WHRU) dargestellt ist und
der Wärmetauscher der Erzeugungseinheit für verdampften Sauerstoff durch den Wärmetauscher einer CO₂-Verflüssigungseinheit (LUEX) dargestellt ist.

## Revendications

1. Un procédé pour produire de l'énergie électrique, pour produire du gaz naturel et du dioxyde de carbone liquide, comprenant les étapes suivantes :
étape I), dans laquelle un flux de gaz naturel liquéfié GNL (33) pompé est soumis à une étape d'échange thermique, obtenant un flux de gaz naturel GN (34) partiellement vaporisé,
étape II), dans laquelle un flux de gaz brûlé (1) est produit par combustion à haute pression d'un combustible F et soumis aux sous-étapes suivantes :
- sous-étape i. d'expansion, obtenant un gaz brûlé expansé (2) avec production d'énergie,
- sous-étape ii. de refroidissement,
- sous-étape iii. de déshydratation,
- sous-étape iv. de refroidissement supplémentaire, purification et liquéfaction, obtenant un flux de CO₂ liquide (15) et un flux d'oxygène partiellement chauffé (53), et
étape III), dans laquelle un flux d'oxygène liquide pompé (52) est mis à disposition,
dans laquelle, à l'étape I), l'échange thermique est réalisé avec le flux de gaz brûlé expansé (2) obtenu à la sous-étape i., et à la sous-étape iv. de refroidissement supplémentaire, le flux d'oxygène liquide pompé (52) de l'étape III) est utilisé pour obtenir ledit flux d'oxygène partiellement chauffé (53)

2. Un procédé selon la revendication précédente, dans lequel ladite sous-étape ii. comprend en outre une étape d'échange thermique avec le flux d'oxygène liquide partiellement chauffé (53) obtenu à la sous-étape iv.

3. Un procédé selon la revendication 1 ou 2, dans lequel, après l'étape I), le flux de gaz naturel partiellement vaporisé (34) est soumis à une étape d'expansion avec production d'énergie.

4. Un procédé selon l'une quelconque des revendications précédentes, dans lequel ladite sous-étape iii. de déshydratation comprend les étapes suivantes :
iiia) de séparation d'une première portion de vapeur d'eau condensée (4) et d'un flux avec un premier niveau de déshydratation (5) dans un séparateur S1,
iiib) de compression dans un premier compresseur C1 obtenant un flux avec un premier niveau de compression et de déshydratation (6),
iiic) de refroidissement dans un premier échangeur thermique HE1 obtenant un flux comprimé, refroidi et déshydraté (10), et
iiid) de séparation supplémentaire d'une seconde portion de vapeur d'eau condensée (11) et d'un flux avec un second niveau de déshydratation (12) dans un second séparateur S2,
iiie) de traitement dans une unité de déshydratation DH obtenant un flux avec une composition principale de CO₂ (13), dans laquelle chacune desdites étapes iiib), iiic) et iiid) peut être répétée plusieurs fois.

5. Un procédé selon la revendication précédente, dans lequel une seconde portion (7) du flux à un premier niveau de compression et de déshydratation obtenu à l'étape iiib) est séparée et recyclée au brûleur COMB après une étape de compression dans un second compresseur C2 obtenant une portion recyclée comprimée (8).

6. Un procédé selon l'une quelconque des revendications précédentes, dans lequel ladite sous-étape iv. de refroidissement supplémentaire, purification et liquéfaction comprend les étapes suivantes :
iva) refroidir ledit flux avec une composition principale de CO₂ (13) dans un échangeur thermique de l'unité de liquéfaction de CO₂ LUEX, obtenant un flux refroidi avec une composition principale de CO₂ (14),
ivb) séparer, à partir dudit flux refroidi avec une composition principale de CO₂ (14), un flux de CO₂ liquide (15) depuis le fond d'un premier séparateur de l'unité de liquéfaction S1_{LU} et une première phase gazeuse riche en CO₂ (16) depuis le sommet dudit premier séparateur S1_{LU},
ivc) comprimer ladite première phase gazeuse riche en CO₂ (16) dans un premier compresseur de l'unité de liquéfaction C1_{LU} obtenant une première phase gazeuse comprimée (17),
ivd) refroidir davantage ladite première phase gazeuse comprimée (17) dans ladite unité de liquéfaction de CO₂ LUEX par échange thermique avec le flux pompé d'oxygène (52) obtenant une première phase gazeuse davantage refroidie (18) et ledit flux d'oxygène partiellement chauffé (53),
ive) séparer davantage, à partir de ladite première phase gazeuse davantage refroidie (18), un flux de gaz non condensé (19) depuis le sommet d'un second séparateur de l'unité de liquéfaction S2_{LU} et une phase liquide riche en CO₂ (20) depuis le fond, réunie, après détente par le biais de la vanne de détente V1, avec le flux refroidi avec une composition principale de CO₂ (14) obtenu à l'étape iva).

7. Un procédé selon la revendication précédente, dans lequel ladite étape ivd) de refroidissement supplémentaire est une étape iv'd) réalisée par échange thermique indirect avec ledit flux pompé d'oxygène liquide (52).

8. Un procédé selon la revendication précédente, dans lequel ladite étape iv'd) comprend les sous-étapes suivantes :
iv'0) obtention, par refroidissement dans un échangeur de l'unité de liquéfaction LUEX, d'un flux refroidi d'un fluide frigorigène RF1 par échange thermique avec ledit flux pompé d'oxygène (52),
iv'a) refroidissement dans un bain réfrigérant RB dudit flux avec une composition principale de CO₂ (13) par échange thermique avec ledit flux refroidi de fluide frigorigène RF1, obtenant un flux refroidi avec une composition principale de CO₂ (14) et un flux évaporé dudit fluide frigorigène RF2,
iv'b) séparation, à partir dudit flux refroidi avec une composition principale de CO₂ (14), d'un flux de CO₂ liquide (15) depuis le fond d'un premier séparateur de l'unité de liquéfaction S1_{LU} et d'une première phase gazeuse riche en CO₂ (16) depuis le sommet dudit premier séparateur de l'unité de liquéfaction S1_{LU},
iv'c) compression de ladite première phase gazeuse riche en CO₂ (16) dans un premier compresseur de l'unité de liquéfaction C1_{LU} obtenant une première phase gazeuse comprimée (17),
iv'd) refroidissement supplémentaire de ladite première phase gazeuse comprimée dans le bain réfrigérant RB par échange thermique avec le flux refroidi du fluide frigorigène RF1 obtenant un flux évaporé du fluide frigorigène RF2 et une phase gazeuse davantage refroidie (18),
iv'e) séparation supplémentaire, à partir de ladite première phase gazeuse davantage refroidie (18), d'un flux de gaz non condensé (19) depuis le sommet d'un second séparateur de l'unité de liquéfaction S2_{LU} et d'une seconde phase liquide riche en CO₂ (20) depuis le fond, laquelle est réunie, après détente par le biais de la vanne de détente V1, avec le flux refroidi avec une composition principale de CO₂ (14) obtenu à l'étape iv'a).

9. Un procédé selon l'une quelconque des revendications 4 à 8, dans lequel, à l'étape iiic), ledit refroidissement est obtenu par échange thermique avec le flux de gaz naturel partiellement vaporisé (34) obtenu à l'étape I) ou avec une portion dudit flux de gaz naturel plus vaporisé (35', 37').

10. Un procédé selon l'une quelconque des revendications 4 à 9, dans lequel une pluralité d'étapes iiib), iiic) et iiid) est réalisée, et avant ladite étape iiie), une portion recyclée (7') est séparée et pompée au moyen d'une pompe P_{R}, obtenant une portion recyclée à haute pression (8'), laquelle est utilisée dans une étape d'échange thermique avec ledit flux de gaz brûlé expansé (2), obtenant un flux recyclé chauffé (8") recyclé vers le brûleur COMB.

11. Un procédé selon l'une quelconque des revendications 4 à 10, dans lequel, à l'étape iiic), ledit refroidissement est obtenu par échange thermique avec une ou plusieurs portions d'un premier fluide de travail (72, 74), lequel est refroidi par échange thermique avec le flux pompé de gaz naturel liquéfié (33).

12. Un procédé selon l'une quelconque des revendications précédentes, dans lequel ledit échange thermique de l'étape I) est un échange thermique indirect entre ledit flux de gaz brûlé expansé (2) obtenu à la sous-étape i. et ledit flux pompé de gaz naturel liquéfié (33).

13. Un procédé selon la revendication précédente, dans lequel ledit échange thermique indirect comprend une étape d'échange thermique entre ledit flux pompé de gaz naturel liquéfié (33) et un flux d'un second fluide de travail (77"), obtenant un flux refroidi dudit second fluide de travail (78").

14. Un procédé selon la revendication précédente, dans lequel une ou plusieurs étapes d'échange thermique sont réalisées avec le flux de gaz brûlé expansé (2) obtenant des flux respectifs chauffés dudit second fluide de travail (73", 75"), dans lequel chacun desdits flux chauffés dudit second fluide de travail (73", 75") est soumis à une étape d'expansion dans un premier et/ou éventuellement un second détendeur du second fluide de travail EX1FL2, EX2LF2 avec production d'énergie.

15. Un procédé selon l'une quelconque des revendications 4 à 14, dans lequel, à l'étape iiic), ledit refroidissement est obtenu par échange thermique avec un flux de gaz naturel (34v) obtenu après échange thermique avec un flux dudit second fluide de travail (75v), obtenant un flux de gaz naturel partiellement chauffé (35v) utilisé à l'étape I).

16. Un procédé selon l'une quelconque des revendications précédentes, dans lequel ledit flux pompé d'oxygène liquide (52) et ledit flux pompé de gaz naturel liquéfié (33) sont obtenus à partir de quantités respectives d'oxygène liquide et de gaz naturel liquéfié produites à l'aide d'énergie électrique disponible en excès.

17. Une installation pour produire de l'énergie électrique, du gaz naturel et du dioxyde de carbone liquide, comprenant :
I) une ligne de regazéification de gaz naturel liquéfié comprenant un échangeur thermique,
II) une unité de production d'énergie comprenant un brûleur, de préférence un oxy-brûleur, un détendeur, et une unité de récupération de chaleur résiduelle (WHRU),
III) une unité de production d'oxygène vaporisé comprenant un échangeur thermique,
IV) une unité de refroidissement, purification et liquéfaction de CO₂, comprenant un échangeur thermique, à l'intérieur d'une unité de liquéfaction (LUEX),
V) une unité de préparation d'oxygène liquide comprenant une unité de séparation de l'air (ASU),
VI) une unité de préparation de gaz naturel liquéfié, comprenant une unité de purification et de liquéfaction (P&L),
dans laquelle :
l'échangeur thermique de la ligne de regazéification de gaz naturel liquéfié est représenté par ladite unité de récupération de chaleur résiduelle (WHRU) et
l'échangeur thermique de l'unité de production d'oxygène vaporisé est représenté par l'échangeur thermique d'une unité de liquéfaction de CO₂ (LUEX).
